## Europäisches Patentamt

## European Patent Office

## Office européen des brevets

(11) Publication number: **0 105 709**
**B1**

(12) **EUROPEAN PATENT SPECIFICATION**

(45) Date of publication of patent specification: **10.09.86**

(51) Int. Cl.⁴: **F 03 B 3/12**

(21) Application number: **83305826.6**

(22) Date of filing: **28.09.83**

(54) A Francis-type hydraulic turbine runner.

(30) Priority: **30.09.82 US 431255**

(43) Date of publication of application:
**18.04.84 Bulletin 84/16**

(45) Publication of the grant of the patent:
**10.09.86 Bulletin 86/37**

(84) Designated Contracting States:
**CH DE FR GB LI SE**

(56) References cited:
**DE-C- 367 947**
**FR-A- 684 947**
**US-A-1 929 098**

(73) Proprietor: **Canadian General Electric Company Limited**
**1420 Dupont Street**
**Toronto, Ontario M6H 2B2 (CA)**

(72) Inventor: **McNabb, Jacques Yvon**
**261 Castle Road**
**Beaconsfield Quebec (CA)**
Inventor: **Novak, Richard August**
**5, Otis Place**
**Boston Massachusetts (US)**
Inventor: **Holmes, David Graham**
**1520 Grendside Avenue**
**Schenectady New York (US)**

(74) Representative: **Miller, Joseph et al**
**J. MILLER & CO. Lincoln House 296-302 High Holborn**
**London WC1V 7JH (GB)**

## Description

The present invention relates to a Francis-type hydraulic turbine runner rotatable about an axis of rotation and having a crown forming one axial end thereof, a band concentric with the crown, and an array of blades between the band and the crown, the runner terminating at its end axially remote from the crown in an outlet end, each of the blades having a suction face and a pressure face (when the runner is used as a turbine), the latter face trailing the suction face with respect to the direction of rotation, the suction and pressure faces meeting between the band and the crown at the outer periphery of each of the blades in a flow dividing edge and the faces providing substantially smooth streamlined surfaces to define flow paths between adjacent blades.

A Francis-type hydraulic turbine runner is rotated by the action of water passing through a plurality of flow paths formed between adjacent blades. Each blade has a flow dividing edge which defines the line of demarkation between a suction surface leading in the direction of rotation and a trailing pressure surface. In a conventional runner, the blades are normally oriented so that the leading edge thereof slopes from the outlet end towards the crown in the direction of rotation of the runner.

One of the problems inherent in conventional runner designs is their susceptability to cavitation damage, particularly at or near a fillet, which forms the junction between the band and the suction face of each blade, immediately downstream of the flow dividing edge in the direction of water flow. Such cavitation has been known to cause severe damage to the blades and to require field repair and, in some cases, blade modifications both of which are difficult to perform and are costly.

Such cavitation is also indicative of poor velocity distribution in the flowing liquid which inherently reduces the hydraulic efficiency of the equipment. It is obviously advantageous to minimise such hydraulic losses where possible (see for example CA—A—748,229).

Generally, the turbine blade is designed or contoured to minimize cavitation and maximize efficiency. In some cases it has been found necessary to surface finish the runner in discrete locations, particularly in the fillet area between the blade and band, for example with a stainless steel overlay. This practice is expensive and its use is generally held to a minimum.

According to the present invention there is provided a Francis-type hydraulic turbine runner rotatable about an axis of rotation and having a crown forming the upper axial end thereof when said axis of rotation is substantially vertical, a band concentric with said crown on said axis of rotation, and an array of blades between said band and said crown, said runner terminating at its lower end in an outlet end, each of said blades having a suction face and a pressure face trailing said suction face in the direction of rotation, said suction and pressure faces meeting between said band and said crown at the outer periphery of each of said blades in a flow dividing edge, said faces providing substantially smooth streamlined surfaces to define flow paths between adjacent ones of said blades in said array, characterised in that each of said flow dividing edges meets with and terminates at said band adjacent an upper edge of said band at a junction, a first portion of said suction face of each blade being located immediately adjacent to said junction and said flow dividing edge and being exposed when viewed in an axial direction looking toward said outlet end so that said first portion of said suction face extends from said band toward said crown and slopes rearwardly in the direction of rotation of said runner, a second portion of each of said suction faces being spaced from the respective first portion, said second portions being exposed when viewed in an axial direction looking from said outlet end and being located below said junctions.

By this means the present invention seeks to provide a Francis-type hydraulic turbine runner which permits reduction in cavitation, particularly at or near the fillet forming the junction between the band and the suction side of the blade.

Preferred features of the present invention and their advantages will become apparent from the description and claims given below.

In the context of the present invention, the term streamline as used to describe the suction and pressure surfaces is to be understood not to include surfaces that introduce a sudden angular departure from a preceeding portion of the surface such as the change at the junction of the two blades secured together to form a runner blade in CA—A—31.013. Such angular departures introduce secondary flows, thereby defeating to a large extent the advantages of the present invention. The term streamline is not intended however to imply that the curvature of the blade is necessarily constant. The term is to be understood to have the meaning usually assigned to it in the art of fluid dynamics and particularly in the design of continuously curved working flow paths as used in hydraulic turbines.

The present invention is described in terms of a Francis-type turbine but it is to be understood that it is equally applicable to a Francis type pump turbine.

The present invention will now be described, merely by way of example, with reference to the accompanying drawings, in which:

Figure 1 is a perspective view of a conventional Francis-type turbine runner showing a typical shape and orientation of the blades thereof;

Figure 2 is a perspective view of a Francis turbine runner constructed in accordance with the present invention showing the orientation and curvature of the blades thereof;

Figure 3 is an axial view, looking in a direction towards the outlet end, of an isolated blade of the runner of Figure 2, the blade being shown in solid lines and a typical conventional blade being shown in heavy dashed lines; and

Figure 4 is a sectional view along the line 4—4 of Figure 3 showing the typical curvature of a blade forming part of a runner according to the present invention.

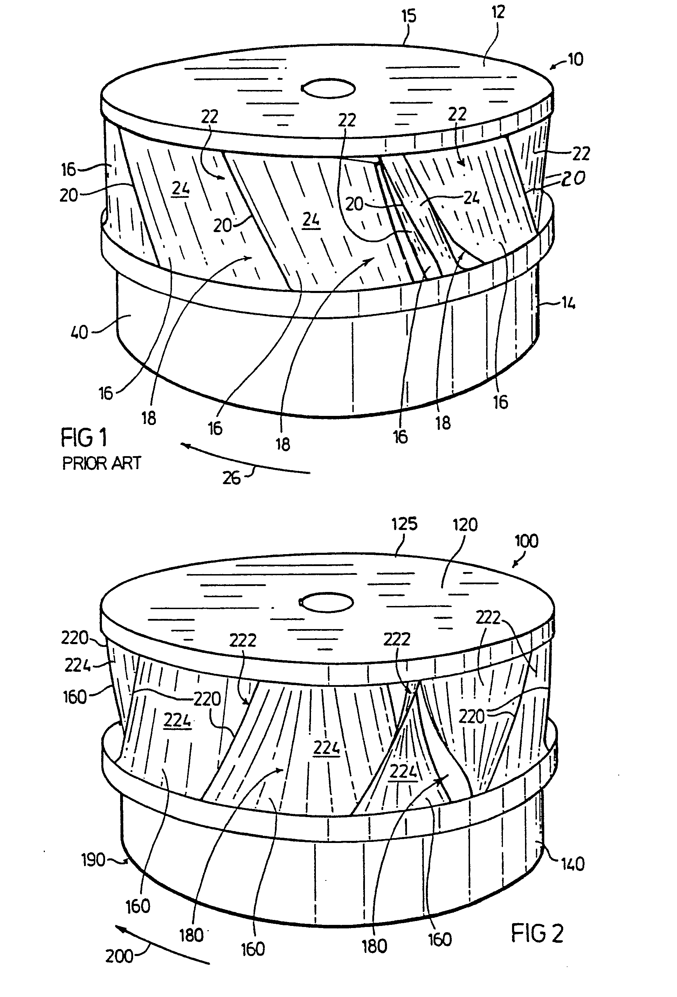

Figure 1 shows a conventional prior art Francis runner 10 comprising a crown 12, having a conventionally shaped substantially conical hub (not shown), which forms one axial end 15 thereof, a band 15 concentric with the crown on the axis of rotation of the runner, and a plurality of blades 16 interposed between crown 12 and band 14. Flow paths generally indicated at 18 permit water to enter the runner in a substantially radial direction and pass smoothly through the runner to the outlet end generally indicated at 40 at the end of the runner remote from the crown 12. The flow paths 18 are formed between pairs of adjacent blades 16. The outer peripheral edge 20 of each blade is defined by the junction between the suction face 22 thereof which leads in the direction of rotation of the runner and the pressure face 24 which trails with respect to the direction of rotation (when the apparatus is operated as a turbine). The flow dividing edges 20 direct water into adjacent flow paths on opposite sides of each of the blades. The flow dividing edges 20 are not sharp edges but are smoothly contoured to facilitate water flow along opposite faces of the blades.

It will be noted that in the prior art each of the edges 20, and in fact the whole of each blade 16, extending from the outlet end 40 towards the crown 12, is sloped forwardly with respect to the direction in which the runner 10 is rotated by water flow through the passages 18. This direction is indicated by the arrow 26.

A Francis-type hydraulic turbine runner 100 according to the present invention is illustrated in Figures 2 to 4. This runner also comprises a crown 120, which forms one axial end 125 of the runner, a band 140 concentric therewith on the axis of rotation of the runner, and an array of blades 160. However, in this case the blades 160 have been significantly modified to alter the flow paths 180 formed between adjacent blades 160 and which extend from substantially radial inlets adjacent the outer periphery of the blades to an outlet end 190 and through which water flows as the runner 100 rotates on its axis in the direction indicated by arrow 200.

Flow dividing edges 220 formed at the outer periphery of the blades 160 between the band 140 and crown 120, as described above, define the line of junction between the suction and pressure faces 222 and 224 respectively of each blade. At least a part of the flow dividing edge 220 and a part of the body of each blade extending towards the crown 120 from the band 140 slopes rearwardly with respect to the direction of rotation 200 of the runner 100.

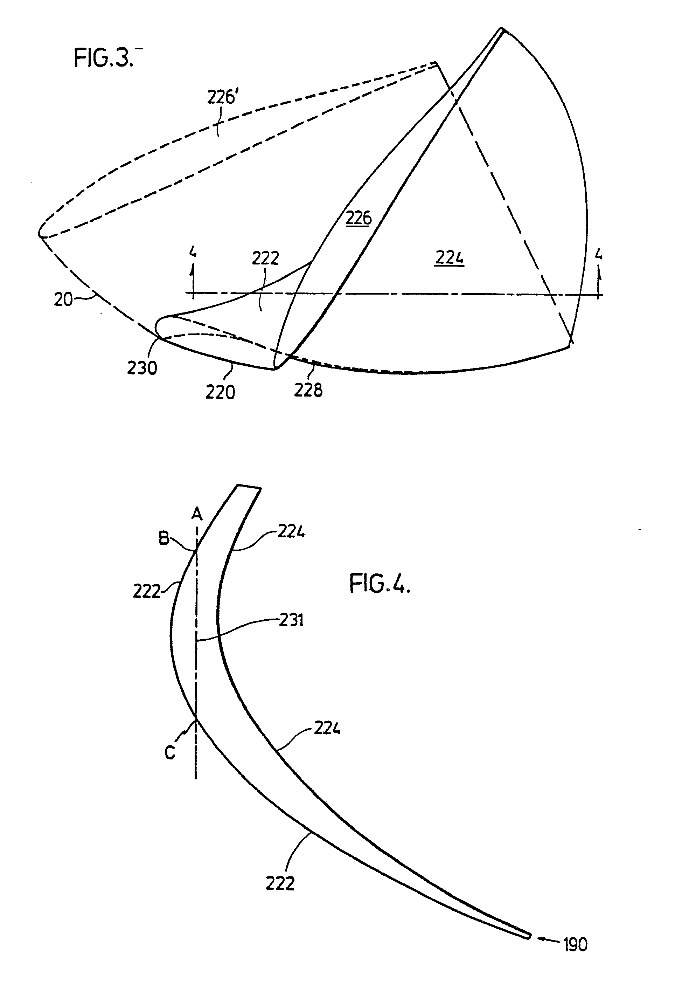

The slope of the blades of the runner illustrated in Figure 2 will now be more fully described with reference to Figures 3 and 4. An isolated blade 160 is shown in Figure 3, viewed in a direction parallel to the axis of rotation of the runner in the direction towards the outlet end 190. The flow dividing edge 220, which defines the line of demarcation between the suction surface 222 leading with respect to the direction of rotation and the pressure surface 224 trailing the suction face, and the end 226 of the blade that connects the blade to the crown are clearly shown, and the hidden face 228 that connects the blade to the band 140 has been indicated by dotted lines. It should be noted that in this specification one face of a blade is said to trail another face when a point on the trailing face located at a given radius and on a plane perpendicular to the axis of rotation of the runner trails a corresponding point on the leading face located at the same radius and on the same plane.

It will be noted that a portion A of the blade located on the suction surface 222 immediately adjacent to edge 220 and the junction 230 of the edge 220 with a band 140 is swept back or slopes rearwardly with respect to the direction of rotation of the runner and forms an exposed area visible when viewed in the axial direction towards the outlet end 190. In the illustrated arrangement the area A overlies a further portion of the area of the suction surface 222 axially spaced from area A. This overlying relationship has been depicted by the points B and C in Figure 4 on an axial line 231, where the point B lies within the area A, and the point C lies on a further portion of the suction surface 222, the point C being visible when the blade is viewed axially from the outlet end of the runner. The blade thus has substantially a C shaped outer configuration when viewed in cross section at least adjacent the band 140, with the suction surface 222 in the immediate vicinity of the junction 230 leading the remainder of the blade with respect to the direction of rotation of the runner.

The area A lies between the band 140 and the crown 120 and is adjacent the edge 220 and the junction 230, i.e. the area A lies at least in that portion of the surface 222 bounded by junction 230 and a plane perpendicular to the axis of rotation of the runner and passing through the mid point of the edge 220 of each blade 160.

To more clearly indicate the difference in configuration between the present invention and of the prior art, Figure 3 shows in heavy dashed lines the manner in which a blade formed in accordance with the prior art would appear when viewed in the axial direction. It will be apparent that when the blade of the prior art is considered in isolation as shown in Figure 3 none of the suction side of the blade is visible. Alternatively, substantially all of the suction surface of the prior art blade is visible when viewed axially from the outlet end. As shown by the dashed lines, the flow dividing edge 20 of the prior art blade extends forward with respect to the direction of rotation of the runner from the junction 230 to a mounting end 226′ that connects the blade to the crown. The radial extremity of the prior art blade adjacent the crown thus leads the remainder of the blade with respect to the direction of rotation of the runner.

As mentioned above, fillets are normally provided for connecting the blade to the band and to the crown. For the purpose of describing the invention, such fillets have not been considered as part of the blade, and the suction side of the blade is not to be understood to include fillets.

Tests on a relatively unrefined turbine model embodying a runner of the type illustrated in Figures 2 to 4 permitted a reduction of shaft speed by an extra 3% before leading edge cavitation was encountered compared to a model turbine of a conventional design which had been highly refined to reduce such cavitation. Leading edge cavitation typically increases progressively with reduction in shaft speed for a given head. The synchronous shaft speed, i.e. the speed at which the generator produces grid frequency current, is usually at or near the best efficiency operating point of the turbine and it is therefore desirable, but not always possible, for leading edge cavitation to start at a shaft speed which is less than the synchronous speed. Thus, a 3% reduction in shaft speed before cavitation is encountered provides a significant advantage over the prior art. According to the laws of simulatude, such a 3% change in model speed would mean that if a conventional runner operating under a given head condition suffers from cavitation, the use of a runner of the type described above under the same conditions would eliminate or significantly reduce such cavitation.

**Claims**

1. A Francis-type hydraulic turbine runner (100) rotatable about an axis of rotation and having a crown (120) forming the upper axial end thereof when said axis of rotation is substantially vertical, a band (140) concentric with said crown (120) on said axis of rotation, and an array of blades (160) between said band (140) and said crown (120), said runner (100) terminating at its lower end in an outlet end (190), each of said blades (160) having a suction face (222) and a pressure face (224) trailing said suction face (222) in the direction of rotation, said suction and pressure faces (222, 224) meeting between said band (140) and said crown (120) at the outer periphery of each of said blades (160) in a flow dividing edge (220), said faces (222, 224) providing substantially smooth streamlined surfaces to define flow paths between adjacent ones of said blades (160) in said array characterised in that each of said flow dividing edges (220) meets with and terminates at said band (140) adjacent an upper edge of said band at a junction (230), a first portion (A) of said suction face (222) of each blade (160) being located immediately adjacent to said junction (230) and said flow dividing edge (220) and being exposed when viewed in an axial direction looking toward said outlet end (190) so that said first portion (A) of said suction face (222) extends from said band (140) toward said crown (120) and slopes rearwardly in the direction of rotation of said runner (100), a second portion (C) of each of said suction faces (222) being spaced from the respective first portion (A), said second portions (C) being exposed when viewed in an axial direction looking from said outlet end (190) and being located below said junctions (230).

2. A Francis-type hydraulic turbine as claimed in claim 1 characterised in that at least an area of said first portion (A) on each of said blades (160) is in spaced apart alignment in the axial direction with an area of said second portion (C) on its respective blade (160).

3. A Francis-type turbine runner as claimed in claim 1 or 2, characterised in that said flow dividing edge (220) extends from said junction (230) at least part way toward said crown (120) and slopes rearwardly to the directon of rotation.

**Patentansprüche**

1. Laufrad für hydraulische Francis-Turbine (100), das um eine Drehachse drehbar ist und eine Deckplatte (120), die sein oberes axiales Ende bildet, wenn die Drehachse im wesentlichen vertikal ist, ein mit der Deckplatte (120) konzentrisches Band (140) auf der Drehachse und eine Anordnung von Schaufeln (160) zwischen dem Band (140) und der Deckplatte (120) besitzt, wobei das Laufrad (100) an seinem unteren Ende in einem Auslaßende (190) endet, wobei jede der Schaufeln (160) eine Saugseite (222) und eine Druckseite (224) besitzt, die der Saugseite (222) in der Drehrichtung nachläuft, wobei die Saug- und Druckseiten (222, 224) zwischen dem Band (140) und der Deckplatte (120) an der äußeren Peripherie einer jeden der Schaufeln (160) in einer Strömungsteilkante (220) zusammentreffen, wobie die Seiten (222, 224) im wesentlichen glatte stromlinienförmige Flächen vorsehen, um Strömungsbahnen zwischen benachbarten der Schaufeln (160) in der Anordnung abzugrenzen, dadurch gekennzeichnet, daß jede der Strömungsteilkanten (220) zusammentrifft mit und am Band (140) benachbart einer oberen Kante des Bandes bei einer Verbindung (230) endet, wobei ein erster Abschnitt (A) der Saugseite (222) einer jeden Schaufel (160) unmittelbar benachbart der Verbindung (230) und der Strömungsteilkante (220) liegt und exponiert ist, wenn er in einer axialen Richtung mit Sicht zum Auslaßende (190) hin betrachtet wird, so saß sich der erste Abschnitt (A) der Saugseite (222) vom Band (140) zur Deckplatte (120) erstreckt und in Drehrichtung des Laufrads (100) nach hinten abfällt, wobei ein zweiter Abschnitt (C) einer jeden der Saugseiten (222) mit Abstand von dem entsprechenden ersten Abschnitt (A) angeordnet ist, wobei die zweiten Abschnitte (C) exponiert sind, wenn sie in einer axialen Richtung, in Betrachtung vom Auslaßende (190) her betrachtet werden, und unterhalb der Verbindungen (230) angeordnet sind.

2. Laufrad für hydraulische Francis-Turbine nach Anspruch 1, dadurch gekennzeichnet, daß zumindest ein Bereich des ersten Abschnitts (A) auf jeder der Schaufeln (160) in mit Abstand angeordneter Ausrichtung in der axialen Richtung mit einem Bereich des zweiten Abschnitts (C) auf der entsprechenden Schaufel (160) ist.

3. Laufrad für hydraulische Francis-Turbine nach Anspruch 1 oder 2, dadurch gekennzeichnet, daß sich die Strömungsteilkante (220) von der Verbindung (230) zumindest einen Wegteil zur Deckplatte (120) erstreckt und nach hinten in Drehrichtung abfällt.

## Revendications

1. Rotor de turbine hyraulique du type Francis (100) pouvant tourner autour d'un axe de rotation et présentant une partie amont (120) qui forme son extrémité axiale supérieure lorsque ledit axe de rotation est sensiblement vertical, une bande (140) concentrique avec ladite partie amont (120) sur ledit axe de rotation ainsi qu'une distribution de lames (160) situées entre ladite bande (140) et ladite partie amont (120), ledit rotor (100) se terminant à son extrémité inférieure en une extrémité de sortie (190), chacune desdites lames (160) présentant une face sous dépression (222) et une face sous pression (224) qui vient en arrière de ladite face sous dépression (222) dans le sens de rotation, ladite face sous dépression et ladite face sous pression (222, 224) se recontrant, entre ladite bande (140) et ladite partie amont (120), sur la périphérie extérieure de chacune desdites lames (160) en une arête diviseuse du flux (220), lesdites faces (222, 224) fournissant des surfaces profilées sensiblement lisses pour définir des chemins d'écoulement entre celles desdites lames (160) de ladite distribution qui sont voisines, caractérisé en ce que chacune desdites arêtes diviseuses de flux (220) se rencontre avec ladite bande (140), et se termine à cette dite bande, près d'une arête supérieure de ladite bande en un point de jonction (230), une première portion (A) de ladite face sous dépression (222) de chaque lame (160) étant située immédiatement près de ladite jonction (230) et de ladite arête diviseuse de flux (120) et étant vue quand on regarde dans une direction axiale en regardant en direction de ladite exrémité de sortie (190), de sortie que ladite première portion (A) de ladite face sous dépression (222) s'étend depuis ladite bande (140) en direction de ladite couronne (120) et est en pente vers l'arrière dans le sens de rotation dudit r (100), une seconde portion (C) de chacune desdites faces sous dépression (122) étant espacée de la première portion respective (A), lesdites secondes portions (C) étant vues quand on regarde dans une direction axiale en regardant depuis ladite extrémité de sortie (190) étant situées sous lesdites jonctions (230).

2. Turbine hydraulique du type Francis comme revendiqué dans la revendication 1, caractérisée en ce qu'au moins une zone de ladite première portion (A) de chacune desdites lames (160) est alignée, selon la direction axiale, avec une zone de ladite seconde portion (C) de sa lame respective (160), et à une certaine distance de cette seconde portion.

3. Rotor de turbine de type Francis comme revendiqué dans la revendication 1 ou la revendication 2, caractérisé en ce que ladite arête diviseuse de flux (120) s'étend depuis ladite jonction (230) au moins partiellement en direction de ladite portion amont (120) et est en pente vers l'arrière dans le sens de rotation.

FIG 1
PRIOR ART

FIG 2

FIG.3.

FIG.4.

2